# EUROPÄISCHE PATENTSCHRIFT

(11) **EP 0 302 417 B1**
(45) Veröffentlichungstag und Bekanntmachung des Hinweises auf die Patenterteilung: **01.06.1994**
(21) Anmeldenummer: 88112379.8
(22) Anmeldetag: 29.07.1988
(51) Int. Cl.: F27B 1/08, C04B 2/12

(54) **Verfahren und Vorrichtung zum Beheizen von Schachtöfen durch einen Zentralbrenner**
Process and installation for heating shaft furnaces by a central burner
Procédé et installation pour chauffage de fours à cuve par un brûleur central

(30) Priorität: 01.08.1987 DE 3725559
(43) Veröffentlichungstag der Anmeldung: 08.02.1989
(73) Patentinhaber: Sauerländische Kalkindustrie GmbH, D-59929 Brilon (DE)
(72) Erfinder: Thiel, Leonhard, D-3538 Marsberg (DE)

(56) Entgegenhaltungen:
- DE-B- 2 042 838
- DE-B- 2 403 347
- DE-C- 1 941 845
- DE-C- 3 125 320
- ZEMENT-KALK-GIPS, Band 37, Nr. 9, September 1984, Seiten 461-464, Wiesbaden-Biebrich, DE; D. OPITZ: "Optiemierungs-Versuche mit Ringbrennern im Kalkschachtofen"

## Beschreibung

Die Erfindung betrifft ein Verfahren zum Beheizen von Schachtöfen mit gasförmigen Brennstoffen, die ausschließlich durch einen Zentralbrenner zugeführt werden, zur Wärmebehandlung von mineralischem Gut.

Bei den bekannten Verfahren zur Beheizung von Schachtöfen mit gasförmigen Brennstoffen zur Wärmebehandlung von mineralischem Gut wird der Brennstoff durch zentrale und/oder durch seitliche Einspeisung zugeführt.

Bei den Verfahren mit Zentralbrennern wird dem im unteren Drittel des Brennschachts angeordneten Brenner durch getrennte Rohrleitungen Luft und ein Gas-Luft-Gemisch zugeführt. Luft und brennstoffhaltiges Gemisch werden in zwei oder mehr Austrittsebenen wieder ausgeführt. Der Nachteil dieser Verfahren ist, daß insbesondere im Zentralbereich der Steinschüttung, aber auch nahe der Ofenwand überschüssige Luft auftritt. Dadurch wird der Brennvorgang über den Ofenquerschnitt sehr ungleichmäßig. Das zu brennende Gut weist einen qualitätsmindernden zu hohen CO₂-Gehalt auf (Massengehalt von > 3 %).

Auch bei dem aus der Zeitschriftenveröffentlichung Zement-Kalk-Gips, Band 37, Nr. 9, September 1984, Seiten 461 bis 464, bekannten Zentralbrenner strömt zwar ein Teil der Kühlluft als Spreizluft zwischen "Obergas" und "Mischgas" aus, der übrige Teil strömt aber als Unterluft hauptsächlich am Brennermantel entlang nach oben.

Bei der aus DE-A-20 42 838 bekannten Brennerkonstruktion ist die Kühlung der Brennerspitze unzureichend.

Die Verfahren mit seitlicher Zuführung von Brennstoff durch Ringbrenner, wie aus der Deutschen Offenlegungsschrift 24 03 347 bekannt, sollten diesen Nachteil vermeiden. Der mittlere CO₂-Gehalt im erbrannten Produkt kann auch tatsächlich gesenkt werden. Als sehr nachteilig hat sich aber der stark ansteigende Verschleiß der feuerfesten Ausmauerung im Bereich oberhalb der Ringbrenner erwiesen. Die dadurch bedingte Verkürzung der Betriebszeiten der Schachtöfen beeinträchtigt die Wirtschaftlichkeit des Verfahrens erheblich.

Es wurde gefunden, daß auch beim Verfahren mit Zentralbrenner eine so gleichmäßige Verteilung der Temperatur über den Schachtofen-Querschnitt erreicht werden kann, daß das aus der Wärmebehandlung mineralischen Guts erhaltene Produkt einen CO₂ -Gehalt von < 2 % aufweist.

Der Erfindung liegt dabei die Aufgabe zugrunde, die Kühlung im Bereich der Brennerspitze zu verbessern.

Zur Lösung dieser Aufgabe werden erfindungsgemäß die Maßnahmen und Merkmale von Anspruch 1 vorgeschlagen.

Außer den Vorteilen hinsichtlich der längeren Haltbarkeit der feuerfesten Ausmauerung und der verbesserten Produkteigenschaften wird durch das Aufwärmen der Verbrennungsluft, die durch den Brenner geleitet wird, auch eine Energieersparnis erreicht.

Die folgende Beschreibung soll die Durchführung des Verfahrens an einem Beispiel erläutern.

In einem Kalkschachtofen üblicher Bauart mit einem lichten Durchmesser von 3700 mm wandert der Kalkstein durch die Vorwärmzone dem Brenner entgegen. Die Entsäuerung findet bei ca. 1100 °C statt. Der gebrannte Kalk gibt seine Temperatur an die aufsteigende Kalkkühlluft ab. Die Ofenleistung liegt bei 150 t Kalk pro Tag. Der Kalkschachtofen ist mit einem Zentralbrenner mit drei Austrittsebenen ausgerüstet.

Der oberen Austrittsebene wird Gas in Mengen von 220 m³ (i.N.)/h mit einem Heizwert Hᵤ= 32400 kJ/m³ (i.N.) zugeführt. Der untersten Austrittsebene wird ein Gas-Luftgemisch in Mengen von 1240 m³(i.N.)/h mit einem Heizwert Hᵤ = 15900 kJ/m³ (i.N.) zugeführt. Die Gesamtmenge an Gas beträgt 825 m³(i.N.)/h. An Spreizluft werden der mittleren Austrittsebene des Zentralbrenners 3880 m³(i.N.)/h zugeführt. Die Temperatur der Spreizluft beträgt etwa 100 °C.

Damit wird erreicht, daß ein gleichmäßig gebrannter Kalk mit einem Rest-CO₂-Gehalt von 0,5 bis 1,9 % erhalten wird.

Da der Brenner erfindungsgemäß mit der gesamten Kühlluft des Systems gekühlt wird, wird der Brennerkopf nicht so heiß wie bei anderen Systemen, die nur mit Gas kühlen. Dadurch werden Betriebssicherheit und Lebensdauer des Brennerkopfes erhöht.

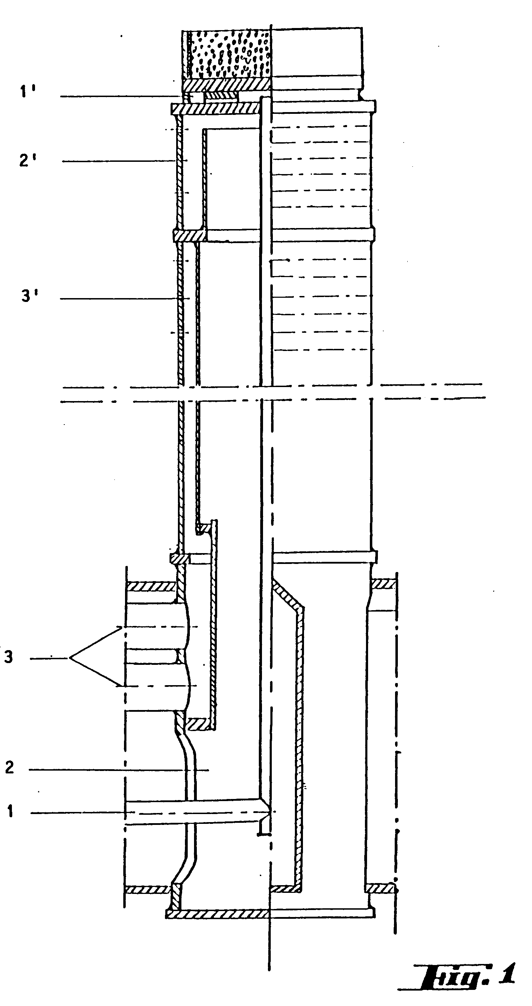

Fig. 1 zeigt den Zentralbrenner im Längsschnitt.

Im unteren Teil des Brenners befinden sich die Zuführung für Gas oder ein Gas-Luft-Gemisch mit hohem Heizwert (1), darüber die Zuführung für Luft (2) und die Zuführung für das Gas-Luft-Gemisch mit niedrigem Heizwert (3).

Der Austritt für das Gas oder Gas-Luft-Gemisch mit hohem Heizwert erfolgt in der Austrittsebene (1'). Die Spitze des Zentralbrenners oberhalb von (1') besteht aus Keramik. Die Luft wird möglichst nahe an die Austrittsebene (1') geführt, dann umgeleitet und tritt in der Austrittsebene (2') als Spreizluft aus. Darunter befindet sich die Austrittsebene für das Gas-Luft-Gemisch mit niedrigem Heizwert (3').

## Patentansprüche

1. Verfahren zum Beheizen von Schachtöfen mit gasförmigen Brennstoffen, die ausschließlich durch einen Zentralbrenner zugeführt werden, zur Wärmebehandlung von mineralischem Gut, wobei im oberen Teil des Zentralbrenners Gas oder ein Gas-Luft-Gemisch mit hohem Heizwert und im unteren Teil des Zentralbrenners ein Gas-Luft-Gemisch mit niedrigem Heizwert zugeführt werden und die gesamte Kühlluft des Brennersystems als Spreizluft zwischen diesen beiden Gasströmen benutzt wird und im Bereich des Brennerkopfes aus dem Brenner austritt.

## Claims

1. Method of heating shaft furnaces using gaseous combustion fuels, which are supplied exclusively through a central burner, for the heat treatment of mineral material, gas or a gas-air mixture with a high calorific value being supplied in the top part of the central burner and a gas-air mixture with a low calorific value being supplied in the bottom part of the central burner, and the entire cooling air of the burner system being utilized as spreading air between said two gas streams and exiting in the region of the port-end from the burner.

## Revendications

1. Procédé pour le chauffage de fours à cuve avec des combustibles gazeux, qui sont amenés exclusivement à un brûleur central, destiné au traitement thermique de matière minérale caractérisé en ce qu'à la partie supérieure du brûleur central est amené du gaz ou un mélange gaz-air à pouvoir calorifique élevé et à la partie inférieur du brûleur central est amené un mélange air-gaz à bas pouvoir calorifique et en ce que l'air total de refroidissement du système de brûleur est utilisé et sort comme air de séparation entre ces deux courants gazeux au niveau de la tête du brûleur.
